# EUROPÄISCHE PATENTSCHRIFT

(11) **EP 3 949 343 B1**
(45) Veröffentlichungstag und Bekanntmachung des Hinweises auf die Patenterteilung: **01.11.2023**
(21) Anmeldenummer: 20706420.5
(22) Anmeldetag: 13.02.2020
(51) Int. Cl.: H04L 67/10, H04L 67/125

(54) **STEUERN ZWISCHEN EINEM FAHRZEUG UND EINER CLOUD VERTEILTER ANWENDUNGEN**
CONTROLLING APPLICATIONS DISTRIBUTED BETWEEN A VEHICLE AND A CLOUD
COMMANDER DES APPLICATIONS RÉPARTIES ENTRE UN VÉHICULE ET UN NUAGE

(30) Priorität: 05.04.2019 DE 102019204940
(43) Veröffentlichungstag der Anmeldung: 09.02.2022
(73) Patentinhaber: Robert Bosch GmbH, 70442 Stuttgart (DE)
(72) Erfinder: GERALDY, Alexander, 31141 Hildesheim (DE); SCHWARDMANN, Jens, 31137 Hildesheim (DE); ECKERT, Kurt, 71254 Ditzingen (DE); WOLTER, Jan, 30173 Hannover (DE); BLANK, Frederik, 71634 Ludwigsburg (DE); WALOSSEK, Erik, 31180 Giesen (DE); BENAM, Behzad, 71229 Leonberg (DE); FLOESS, Karl Theo, 74074 Heilbronn (DE)
(86) Internationale Anmeldenummer: PCT/EP2020/053785
(87) Internationale Veröffentlichungsnummer: WO 2020/200560

(56) Entgegenhaltungen:
- EP-A2- 1 033 691
- WO-A2-2011/026652
- DE-A1-102015 118 489
- US-A1- 2014 277 850

## Beschreibung

Die vorliegende Erfindung betrifft ein Verfahren zum Steuern zwischen einem Fahrzeug und einer Cloud verteilter Anwendungen. Die vorliegende Erfindung betrifft darüber hinaus eine entsprechende Vorrichtung, ein entsprechendes Computerprogramm sowie ein entsprechendes Speichermedium.

### Stand der Technik

Teilautonome Fahrzeuge nach dem Stand der Technik setzen eine Fahrzeugführungsschnittstelle ("Fahrerarbeitsplatz") sowie eine fahrtüchtige und zum Führen des Fahrzeuges autorisierte Person als Fahrzeuginsassen voraus, welche die Führung bei Bedarf zu übernehmen vermag. Den Gegenstand zahlreicher Forschungsprojekte bildet das sogenannte teleoperierte Fahren (*teleoperated driving,* ToD), bei welchem das Fahrzeug im Wege einer Fernsteuerung bei der Bewältigung herausfordernder Szenarien - wie Umleitungen über Feldwege, alternativer und unkonventioneller Routen o. ä. - unterstützt oder die Fahraufgabe durch einen externen Bediener in einer Leitstelle, den sogenannten Teleoperator, zeitweise gänzlich oder teilweise übernommen werden kann. Fahrzeug und Leitstelle bzw. deren Betreiber sind hierzu durch ein Mobilfunknetzwerk meist geringer Latenz und hoher Datenrate miteinander verbunden.

US 9,494,935 B2 offenbart Computervorrichtungen, Systeme und Verfahren für die Fernbedingung eines autonomen Passagierfahrzeugs. Wenn ein autonomes Fahrzeug einer unerwarteten Umgebung wie z. B. einer Straßenbaustelle oder einem Hindernis begegnet, die für autonome Bedienung ungeeignet ist, können die Fahrzeugsensoren Daten über das Fahrzeug und die unerwartete Umgebung, einschließlich Bilder, Radar- und Lidar-Daten usw. erfassen. Die erfassten Daten können zu einem entfernten Bediener gesendet werden. Der entfernte Bediener kann das Fahrzeug manuell entfernt bedienen oder dem autonomen Fahrzeug Anweisungen erteilen, die von verschiedenen Fahrzeugsystemen ausgeführt werden sollen. Die zu dem entfernten Bediener gesendeten erfassten Daten können optimiert werden, um Bandbreite zu sparen, indem z. B. eine eingeschränkte Untermenge der erfassten Daten versendet wird.

Ein Fahrzeug gemäß US 9,767,369 B2 kann ein oder mehrere Bilder einer Umgebung des Fahrzeugs empfangen. Das Fahrzeug kann auch eine Umgebungskarte erhalten. Das Fahrzeug kann auch mindestens ein Merkmal in den Bildern mit einem oder mehreren Merkmalen in der Karte abgleichen. Das Fahrzeug kann auch einen bestimmten Bereich in dem einen oder den mehreren Bildern identifizieren, der einem Teil der Karte entspricht, der sich in einem Schwellenabstand zu dem einen oder den mehreren Merkmalen befindet. Das Fahrzeug kann auch das eine oder die mehreren Bilder komprimieren, um eine geringere Menge an Details in Bereichen der Bilder als dem gegebenen Bereich aufzunehmen. Das Fahrzeug kann die komprimierten Bilder auch einem entfernten System bereitstellen und darauf ansprechend Betriebsanweisungen von dem entfernten System empfangen.

Systeme und Verfahren gemäß US 9,465,388 B1 ermöglichen es einem autonomen Fahrzeug, Hilfe von einem entfernten Bediener anzufordern, wenn das Vertrauen des Fahrzeugs in den Betrieb gering ist. Ein beispielhaftes Verfahren umfasst das Betreiben eines autonomen Fahrzeugs in einem ersten autonomen Modus. Das Verfahren kann auch das Identifizieren einer Situation umfassen, in der ein Vertrauensniveau eines autonomen Betriebs im ersten autonomen Modus unter einem Schwellenwertniveau liegt. Das Verfahren kann ferner das Senden einer Anfrage zur Unterstützung an einen entfernten Assistenten umfassen, wobei die Anfrage Sensordaten einschließt, die einen Teil einer Umgebung des autonomen Fahrzeugs darstellen. Das Verfahren kann zusätzlich das Empfangen einer Antwort von dem entfernten Assistenten umfassen, wobei die Antwort einen zweiten autonomen Betriebsmodus angibt.

Das Verfahren kann auch bewirken, dass das autonome Fahrzeug in der zweiten autonomen Betriebsart gemäß der Antwort von dem entfernten Assistenten arbeitet.

US 9,720,410 B2 offenbart ein weiteres Verfahren zur Fernunterstützung für autonome Fahrzeuge in vorbestimmten Situationen.

EP 1 033 691 A2, DE 10 2015 118489 A1, WO 2011/026652 A2 und US 2014/277850 A1 offenbaren jeweils den Gegenstand des Oberbegriffs von Anspruch 1.

### Offenbarung der Erfindung

Die Erfindung stellt ein Verfahren zum Steuern verteilter Anwendungen zwischen einem Fahrzeug und einer Cloud, eine entsprechende Vorrichtung, ein entsprechendes Computerprogramm sowie ein entsprechendes Speichermedium gemäß den unabhängigen Ansprüchen bereit.

Dem erfindungsgemäßen Ansatz liegt die Erkenntnis zugrunde, dass - wie in anderen Technologiebereichen - auch im Automotive-Bereich die Konnektivität immer wichtiger wird. So erlangen immer mehr Fahrzeuge die Fähigkeit, Verbindungen zu einem Nachrechner (*backend, back-end*) in der Cloud aufzubauen und Daten für verschiedene Anwendungen bereitzustellen oder zu empfangen. Die meisten dieser Anwendungen sind für einen reinen Austausch von Informationen mit besagter Cloud eingerichtet, und Anwendungen wie z. B. Ferndiagnose verwenden diese Daten, um auf selbigen Daten basierende Funktionen bereitzustellen. Vereinzelt können bereits Fahrzeugfunktionen im engeren Sinne in der Cloud ausgeführt werden: In jüngeren Fahrzeuggenerationen z. B. erfasst ein Sprachassistent die Sprache der Fahrzeuginsassen anhand von Tonsignalen, sendet diese in die Cloud, führt dort eine Analyse durch und sendet die erkannten Wörter zurück an das Fahrzeug, wo - basierend auf den erkannten Wörtern und deren Semantik - bestimmte Fahrzeugfunktionen aktiviert oder ausgeführt werden.

Die nachfolgend beschriebene Lösung fußt ferner auf der Einsicht, dass Übertragungsverbindungen zwischen Fahrzeug und Cloud nach dem Stand der Technik zumeist auf minimalen Leistungszusagen hinsichtlich der Dienstgüte (*quality of service,* QoS) beruhen, welche es erlauben, die Konnektivität so gut wie möglich aufrechterhalten, jedoch niemals Verfügbar- und Leistungsfähigkeit jederzeit und überall garantieren. Gerade für Abläufe mit hohen Anforderungen an die funktionale Sicherheit ist es wichtig, über Konzepte zu verfügen, die zumindest eine jederzeitige Kenntnis über den Verbindungsstatus vermitteln oder es gar gestatten, den betreffenden Kommunikationskanal hinsichtlich seines Durchsatzes und seiner Dienstgüte zu steuern.

Das vorgeschlagene Verfahren trägt derart verteilten Fahrzeugfunktionen Rechnung, die nicht mehr auf die Fahrzeugdomäne beschränkt sind, sondern teils in der Cloud und teils im Fahrzeug ausgeübt werden. Nach dem Stand der Technik sind solchermaßen verteilte Anwendungen aufgrund technischer Hemmnisse auf Komfort- und Unterstützungsfunktionen beschränkt, was die erfindungsgemäße Lösung zu überwinden sucht. So erscheint es nach dem Stand der Technik kaum als möglich, dass in der oben beschriebenen Weise verteilte Anwendungen grundlegende Funktionen des Fahrzeugs wie dessen Motormanagement- und Steuerungs- oder Fahrerassistenzfunktionen übernehmen.

Die Vorzüge des erfindungsgemäßen Ansatzes liegen vor diesem Hintergrund in der Erschließung eines beträchtlichen Einsparpotenzials, da Funktionen, die eine hohe Leistung und somit ein teures Fahrzeug-Steuergerät (*electronic control unit,* ECU) erfordern, effizienter und mit geringeren Hardwarekosten im Backend ausgeführt werden können. Darüber hinaus erlaubt eine Ausführungsform der Erfindung gar die Bereitstellung neuartiger Funktionen, die z. B. Informationen von anderen Fahrzeugen verwenden, um die Funktionsfähigkeit eines Fahrzeuges zu verbessern, z. B. durch ein auf Verfügbarkeit und Status von Ladevorrichtungen und dem Status anderer Elektrofahrzeuge basierendes Motormanagement von Elektrofahrzeugen. Schließlich vermag eine Ausgestaltung der Erfindung zur Vermeidung teurer Rückrufaktivitäten beizutragen, da sich ein Großteil der Funktionalität im Backend befindet und somit optimiert und korrigiert werden kann, ohne jedes betroffene Fahrzeug zurückzurufen. Eine derartige Erweiterung der verteilten Funktionen wird durch die erfindungsgemäße Steuerung und Überwachung der Verfügbarkeit der Verbindung zum Backend ermöglicht.

Es ist vorgesehen, dass die erfindungsgemäß gesteuerten Anwendungen ein teleoperiertes Fahren erlauben. In diesem Fall wird ein Großteil der Fahrzeugsteuerung im Backend durchgeführt; z. B. könnte ein Teleoperator die Wahrnehmung eines autonomen Fahrzeugs durch die Festlegung einer neuen Bewegungsbahn für die Fahrt gleichsam "überschreiben" und das Fahrzeug somit bei der Überwindung problematischer Bereiche oder Situationen unterstützen. Im Extremfall könnte ein Bediener das Fahrzeug von der Leitstelle aus vollständig manövrieren. Dies mag etwa erforderlich sein, wenn sich ein autonomes Fahrzeug aufgrund einer herausfordernden Verkehrssituation oder einem anderweitigen Problem in einer schwierigen Lage befindet und für das autonome Fahren wieder aktiviert werden muss, indem der Teleoperator es vorübergehend durch den problematischen Bereich manövriert.

Durch die in den abhängen Ansprüchen aufgeführten Maßnahmen sind vorteilhafte Weiterbildungen und Verbesserungen des im unabhängigen Anspruch angegeben Grundgedankens möglich.

### Kurze Beschreibung der Zeichnungen

Ausführungsbeispiele der Erfindung sind in den Zeichnungen dargestellt und in der nachfolgenden Beschreibung näher erläutert. Es zeigt:
Figur 1 ein durch zwei Kommunikationskanäle mit der Cloud verbundenes Fahrzeug.
Figur 2 das Flussdiagramm eines Verfahrens zum Steuern verteilter Anwendungen.
Figur 3 schematisch die Architektur eines erfindungsgemäßen Steuerprogrammes.
Figur 4 einen ersten Anwendungsfall des in Figur 3 dargestellten Steuerprogrammes.
Figur 5 einen zweiten Anwendungsfall des in Figur 3 dargestellten Steuerprogrammes.
Figur 6 und Figur 7 einen dritten Anwendungsfall des in Figur 3 dargestellten Steuerprogrammes.
Figur 8 und Figur 9 einen vierten Anwendungsfall des in Figur 3 dargestellten Steuerprogrammes.

### Ausführungsformen der Erfindung

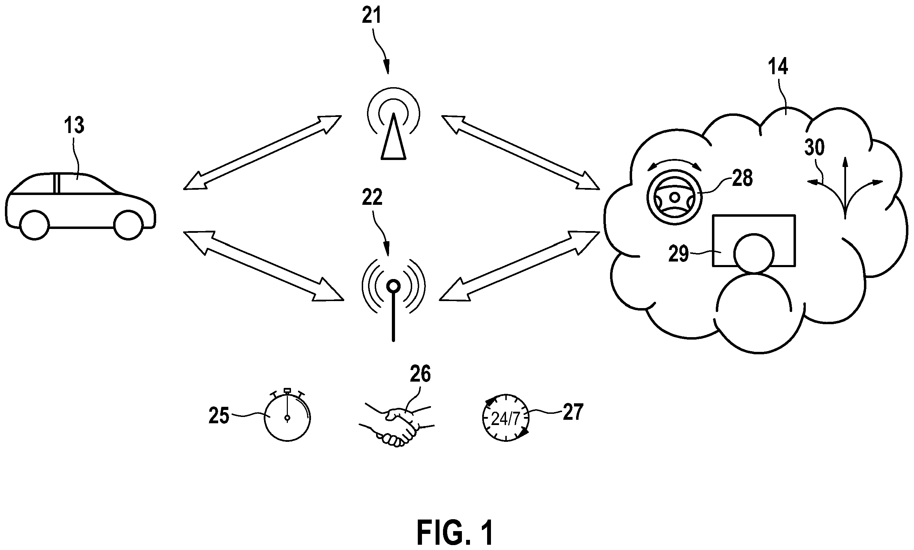

Der allgemeine Ansatz der hier beschriebenen Verfahren besteht darin, Mittel bereitzustellen, die eine gezielte Beeinflussung, Steuerung, Überwachung und Nutzung eines Kommunikationskanals entsprechend den Anforderungen von Funktionen oder Anwendungen ermöglichen, die zwischen Cloud und Fahrzeug verteilt sind. Darüber hinaus können Anwendungen ihre Funktionalität an den aktuellen Status des Kommunikationskanals anpassen. Wenn mehr als ein Kommunikationskanal verfügbar ist - z. B. bei paralleler Kommunikation auf verschiedenen Frequenzen mit unterschiedlicher Codierung und Funkzugriff -, können diese Kommunikationskanäle unter Umständen eine Art Orthogonalität aufweisen. Je ausgeprägter die Orthogonalität, desto geringer ist die Wahrscheinlichkeit, dass ein Problem auf beiden Kanälen gleichzeitig und an demselben Ort auftritt. Diese Orthogonalität wird erfindungsgemäß genutzt, um die Gesamtleistung der Kommunikation zu verbessern, wenn beide Kanäle gleichzeitig als Kommunikationsmittel für eine Funktion verfügbar sind. Eine Übersicht gibt Figur 1.

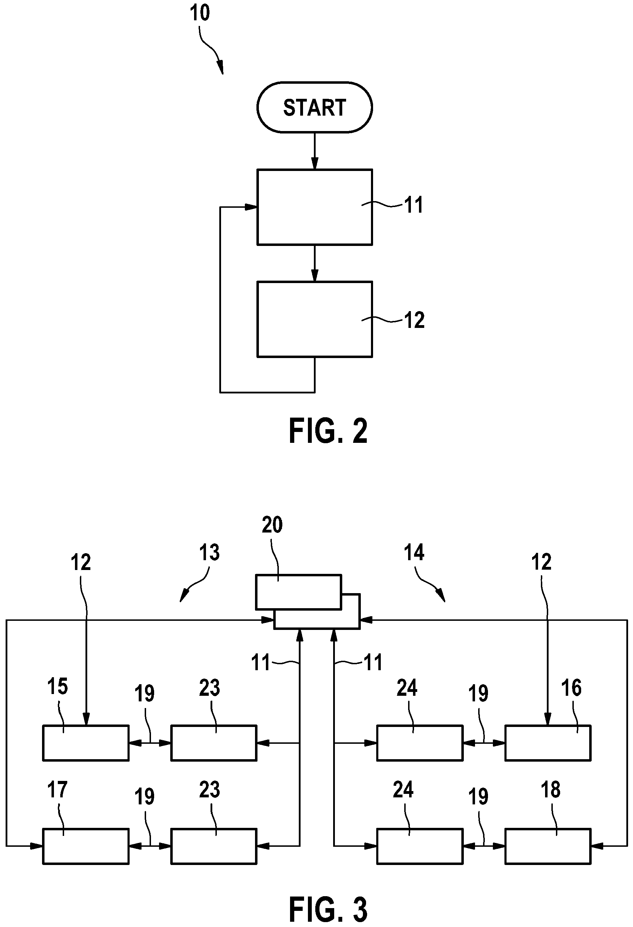

Figur 2 illustriert ein hierzu geeignetes Verfahren (10), dessen Ablauf im Folgenden anhand des in Figur 3 auf hoher Abstraktionsebene dargestellten Systems erläutert sei. Um die Anwendung zu überwachen und zu steuern, ist eine Art Überwachungseinheit (im Folgenden: "Supervisor") erforderlich. Dieser Applikations-Supervisor (20) überwacht (Prozess 11 - Figur 2) permanent und in Echtzeit die Kommunikationsbedingungen für die verschiedenen verfügbaren Kommunikationskanäle (21, 22) und entscheidet auf der Grundlage der überwachten Fähigkeiten und der Qualität dieser Kommunikationskanäle (21, 22), wie die Funktion an die Kommunikationsfähigkeiten oder die Kommunikation an die Anforderungen der jeweiligen Anwendung (15, 16, 17, 18) angepasst werden soll (Prozess 12 - Figur 3). Somit kann der Supervisor (20) die funktionalen Sicherheitsanforderungen der Anwendungen (15, 16, 17, 18) berücksichtigen. Der Anwendungs-Supervisor (20) befindet sich möglicherweise im Fahrzeug (13), im Backend oder ist selbst auf Fahrzeug (13) und Backend verteilt. Es kann mehrere Anwendungen (15, 16, 17, 18) und Kommunikationseinheiten (23) geben, die von einem gemeinsamen Supervisor (20) gesteuert und angepasst werden; es ist ebenso denkbar, dass mehrere Supervisors (20) verfügbar sind und die Überwachung (11) und Anpassung (12) getrennt oder koordiniert erfolgen.

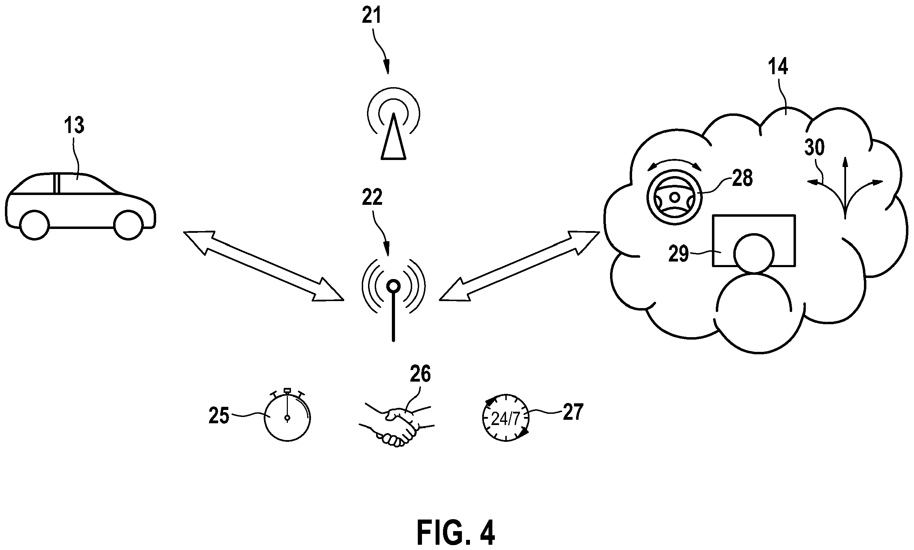

Figur 4 verdeutlicht den Aspekt eines möglichen Wechsels zwischen Kommunikationskanälen (21, 22). Der Supervisor (20) überwacht in diesem Anwendungsfall die Kanäle (21, 22) und entscheidet, ob der eine oder der andere Kanal (21, 22) verwendet wird. Dies erfolgt dynamisch auf der Grundlage einer kontinuierlichen oder zumindest regelmäßigen Überwachung (11) der Kanäle (21, 22) und entsprechenden Anpassung (12) derer Funktionsfähigkeiten. Hierbei können Parameter wie die Kommunikationswartezeit (Latenz 25), die zur Fehlerwahrscheinlichkeit umgekehrt proportionale Kommunikationssicherheit oder Zuverlässigkeit (26), die zur Wahrscheinlichkeit eines Kommunikationsausfalls umgekehrt proportionale Verfügbarkeit (27) der Kommunikationskanäle (21, 22) oder die für die Kommunikation verfügbare Datenkapazität Berücksichtigung finden. Abhängig von der Dauer des Umschaltvorgangs sollte der Supervisor (20) die Anwendungen (15, 16, 17, 18) möglicherweise auf einen anstehenden Wechsel vorbereiten und den jeweils anderen Kommunikationskanal (21, 22) auf die wechselnden Anwendungen (15, 16, 17, 18) einrichten. Somit kann der Supervisor (20) auch in diesem Fall die funktionalen Sicherheitsanforderungen der Anwendungen (15, 16, 17, 18) berücksichtigen.

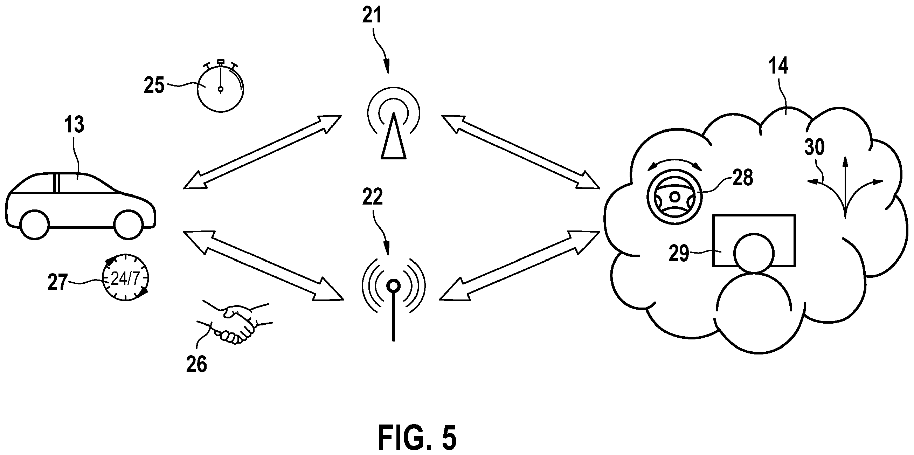

Figur 5 veranschaulicht den Aspekt einer parallelen Verwendung redundanter Kommunikationskanäle (21, 22) mit Funktionsdatenklassifizierung: Wenn mehrere Kanäle (21, 22) in dieser Weise gleichzeitig verwendet werden, teilt der Anwendungs-Supervisor (20) im vorliegenden Anwendungsfall die Kommunikationstypen der Anwendungen (15, 16, 17, 18), die er steuert, basierend auf deren Anforderungen - beispielsweise hinsichtlich Latenz (25), Datendurchsatz und Datensicherheit oder Zuverlässigkeit (26) - in verschiedene Klassen ein und ordnet diese Klassen dynamisch den von ihm gesteuerten und verwalteten Kommunikationskanälen (21, 22) zu. Somit ist es möglich, die verfügbaren Kanäle (21, 22) höchst effizient und optimal an die Anforderungen der Funktion angepasst zu nutzen. Die Klassifizierung der Anwendungsdaten und deren Verteilung auf die verfügbaren Kanäle (21, 22) erfolgt dynamisch auf der Grundlage deren kontinuierlicher oder zumindest regelmäßiger Überwachung (11) und entsprechender Anpassung (12) der Funktionen. Auf diese Weise kann der Anwendungs-Supervisor (20) auch in diesem Fall die funktionalen Sicherheitsanforderungen der Anwendungen (15, 16, 17, 18) berücksichtigen.

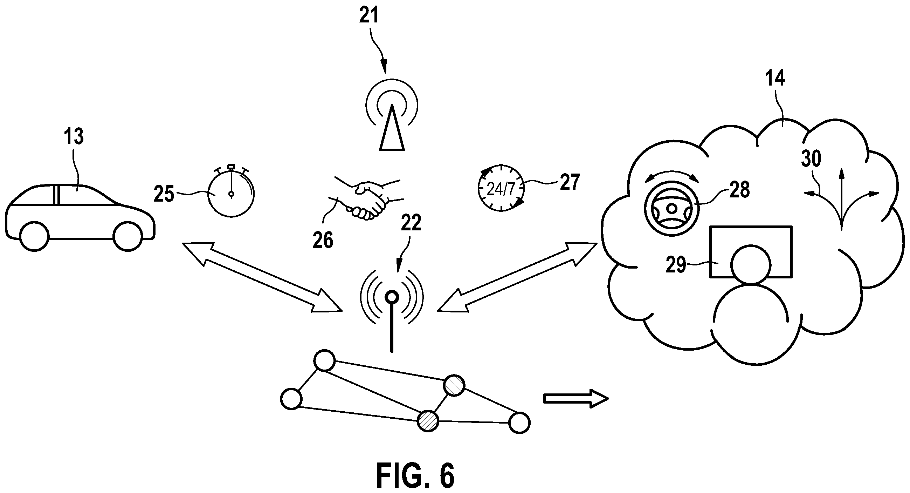

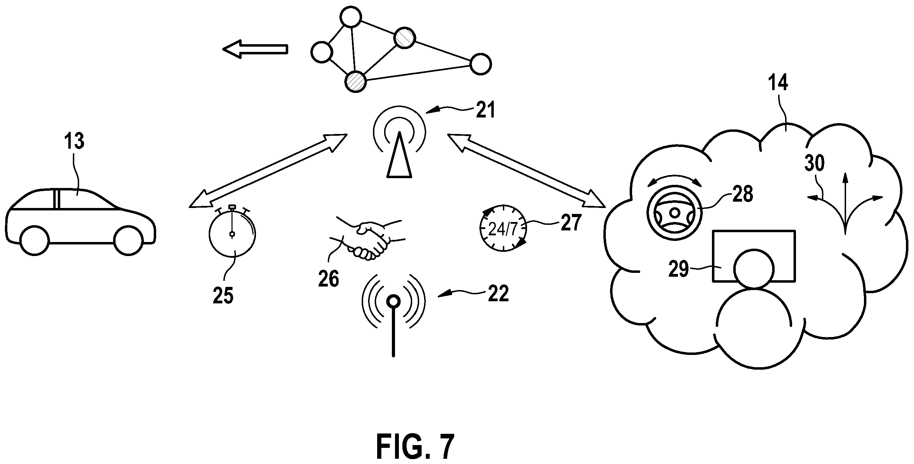

Die Figuren 6 und 7 verdeutlichen in ihrer Zusammenschau den Aspekt einer dynamischen Funktionspartitionierungsänderung. Insofern ist zu beachten, dass die Aufgabenverteilung zwischen Cloud (14) und Fahrzeug (13) zur Erfüllung einer bestimmten Funktion üblicherweise nicht festgelegt ist. Es besteht mithin die Möglichkeit, kleinere oder größere Teile der Funktionalität vom Fahrzeug (13) in die Cloud (14) auszulagern. So kann sich z. B. im Falle einer Spracherkennung der Funktionsteil im Backend auf eine Worterkennung beschränken oder die vollständige semantische Analyse der Sprachelemente mitsamt deren Zuordnung zu Fahrzeugfunktionen in der Cloud (14) erfolgen; das Ergebnis einer derartigen Analyse wäre ein direkter Zugriff auf die besagten Fahrzeugfunktionen. Basierend auf der Überwachung (11) und den Fähigkeiten der Anwendungen (15, 16, 17, 18) kann der im Backend betriebene Teil der Anwendungen (16, 18) angepasst werden. So mögen, wenn die Kommunikationsfähigkeiten hierzu ausreichen, in der Cloud (14) mehr Funktionen ausgeführt werden (Figur 6); wenn die Kommunikation beeinträchtigt ist, würde hingegen Funktionalität zurück ins Fahrzeug (13) verlagert (Figur 7). Auch auf diesem Wege kann der Anwendungs-Supervisor (20) somit die funktionalen Sicherheitsanforderungen der Anwendungen (15, 16, 17, 18) berücksichtigen. Der Supervisor (20) kann ferner dazu eingerichtet sein, zwischen verschiedenen Anwendungsinstanzen mit unterschiedlichen Fähigkeiten auf Backend- bzw. Fahrzeugseite zu wechseln, oder er kann die Fähigkeiten einer Anwendungsinstanz durch Kommunikation mit dieser Instanz selbst anpassen.

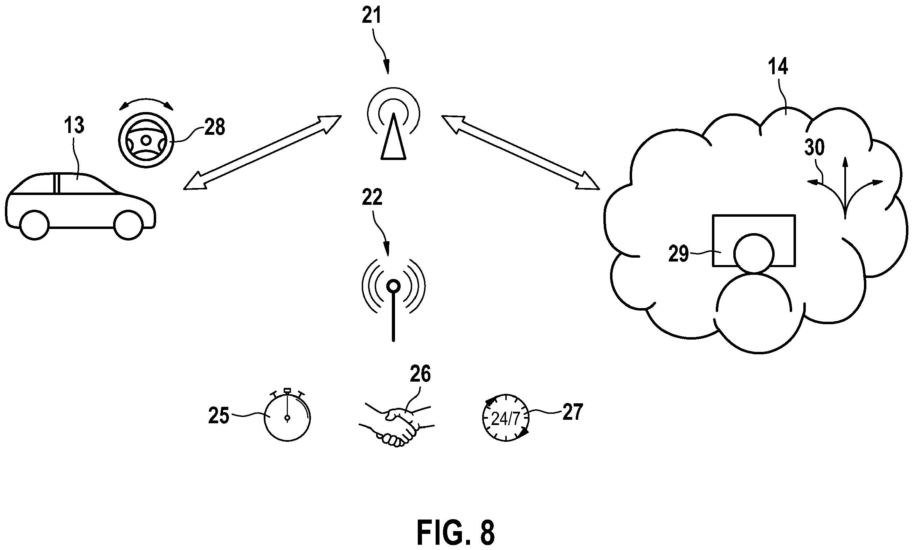

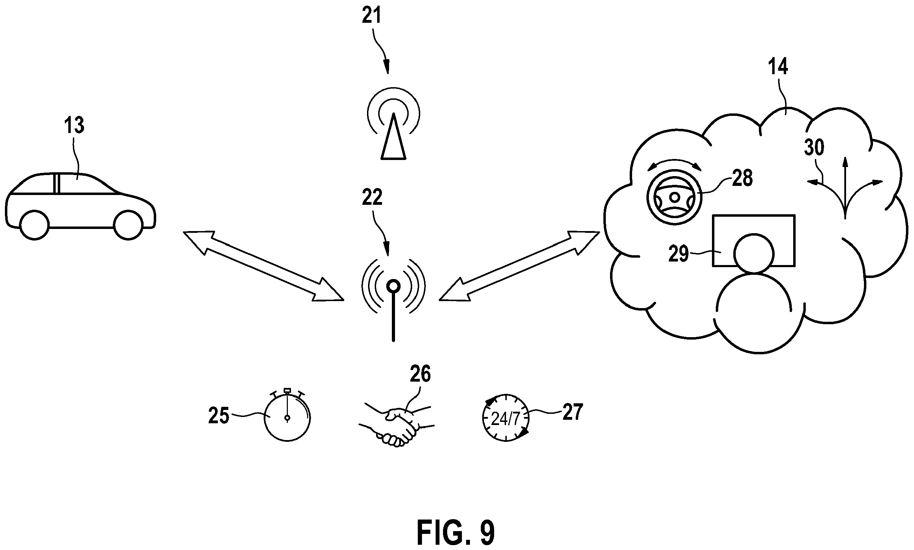

Die Figuren 8 und 9 schließlich betreffen den Aspekt einer teleoperierten Fahrsituation. In diesem Anwendungsfall ist es wichtig, dass der Teleoperator (29) einen angemessenen Überblick über das Umfeld des teleoperierten Fahrzeuges (13) hat. Dies wird erreicht, indem Sensorinformationen - z. B. Video, Radar, Lidar oder Fahrzeugsystemzustand - vom Fahrzeug (13) oder anderen Informationsquellen - z. B. von der öffentlichen Infrastruktur umfassten Kameras - über die Kommunikationskanäle (21, 22) an den Teleoperator (29) gesendet werden. Wenn sich die Kommunikationsfähigkeiten ändern und diese Änderung vom Supervisor (20) sowohl seitens des Fahrzeuges (13) als auch seitens des Backends präzise und sicher überwacht wird, ist es einerseits möglich, den Umfang der Unterstützung durch den Teleoperator (29) dynamisch zu ändern und beispielsweise von einer Überwachung der Bewegungsbahn (30) des Fahrzeuges (Figur 8) auf dessen vollständiges Manövrieren (28) durch den Teleoperator (29) umzustellen (Figur 9). Andererseits könnte die Entscheidung getroffen werden, das Fahrzeug (13) in einen sicheren Zustand (*safe state*) zu versetzen, wenn die Dienstgüte des genutzten Kommunikationskanals (20, 21) unter einen bestimmten Schwellenwert fällt.

Dieses Verfahren (10) kann beispielsweise in Software oder Hardware oder in einer Mischform aus Software und Hardware beispielsweise in einem Steuergerät implementiert sein.

## Patentansprüche

1. Verfahren (10) zum Steuern zwischen einem Fahrzeug (13) und einer Cloud (14) verteilter Anwendungen (15, 16, 17, 18),
mit folgenden Merkmalen:
- eine Überwachung (11) von Kommunikationskanälen (21, 22) zwischen dem Fahrzeug (13) und der Cloud (14) wird durchgeführt und bezieht sich auf einen der folgenden Betriebsparameter (25, 26, 27) der Kommunikationskanäle (21, 22):
• eine Latenz (25),
• eine Zuverlässigkeit (26),
• eine Verfügbarkeit (27) oder
• eine Übertragungskapazität und
- anhand der Überwachung (11) werden eine Steuerung und Anpassung (12) eines im Fahrzeug (13) betriebenen Teils (15, 17) der Anwendungen (15, 16, 17, 18) oder eines in der Cloud (14) betriebenen Teils (16, 18) der Anwendungen (15, 16, 17, 18) vorgenommen (12),
- Funktionen der Anwendungen (15, 16, 17, 18) werden wahlweise vom im Fahrzeug (13) betriebenen Teil (15, 17) der Anwendungen (15, 16, 17, 18) oder dem in der Cloud (14) betriebenen Teil (16, 18) der Anwendungen (15, 16, 17, 18) ausgeübt,
- die Steuerung erfolgt, indem die Funktionen abhängig von den Betriebsparametern (25, 26, 27) zwischen dem Fahrzeug (13) und der Cloud (14) verlagert werden,
- die Anwendungen (15, 16, 17, 18) umfassen ein teleoperiertes Fahren des Fahrzeuges (13) und
- die verlagerten Funktionen umfassen ein Manövrieren (28) des Fahrzeuges (13).

2. Verfahren (10) nach Anspruch 1, mit folgenden zusätzlichen Merkmalen:
- eine Konnektivität (19) der Anwendungen (15, 16, 17, 18) wird seitens des Fahrzeuges (13) mittels Kommunikationseinheiten (23) und seitens der Cloud (14) mittels Backend-Konnektoren (24) hergestellt und
- die Überwachung (11) bezieht sich auf die Kommunikationseinheiten (23) und Konnektoren (24).

3. Verfahren (10) nach Anspruch 1 oder 2, mit folgenden zusätzlichen Merkmalen:
- die Kommunikationskanäle (21, 22) werden abwechselnd genutzt und
- die Steuerung erfolgt, indem abhängig von den Betriebsparametern (25, 26, 27) zwischen den Kommunikationskanälen (21, 22) gewechselt wird.

4. Verfahren (10) nach Anspruch 1 oder 2, mit folgenden zusätzlichen Merkmalen:
- die Kommunikationskanäle (21, 22) werden gleichzeitig genutzt und
- die Steuerung erfolgt, indem abhängig von Anforderungen der Anwendungen (15, 16, 17, 18) und den Betriebsparametern (25, 26, 27) die Anwendungen (15, 16, 17, 18) den Kommunikationskanälen (21, 22) zugeteilt werden.

5. Computerprogramm, welches eingerichtet ist, das Verfahren (10) nach einem der Ansprüche 1 bis 4 auszuführen, wenn es durch einen Computer ausgeführt wird.

6. Maschinenlesbares Speichermedium, auf dem das Computerprogramm nach Anspruch 5 gespeichert ist.

7. Vorrichtung (20), die eingerichtet ist, das Verfahren (10) nach einem der Ansprüche 1 bis 4 auszuführen.

## Claims

1. Method (10) for controlling applications (15, 16, 17, 18) distributed between a vehicle (13) and a cloud (14),
comprising the following features:
- monitoring (11) of communication channels (21, 22) between the vehicle (13) and the cloud (14) is performed and relates to one of the following operating parameters (25, 26, 27) of the communication channels (21, 22):
• a latency (25),
• a reliability (26),
• an availability (27) or
• a transmission capacity, and
- based on the monitoring (11), control and adaptation (12) of a portion (15, 17) of the applications (15, 16, 17, 18) operated in the vehicle (13) or of a portion (16, 18) of the applications (15, 16, 17, 18) operated in the cloud (14) is carried out (12),
- functions of the applications (15, 16, 17, 18) are executed either by the portion (15, 17) of the applications (15, 16, 17, 18) operated in the vehicle (13) or the portion (16, 18) of the applications (15, 16, 17, 18) operated in the cloud (14),
- the control takes place by shifting the functions between the vehicle (13) and the cloud (14) based on the operating parameters (25, 26, 27),
- the applications (15, 16, 17, 18) comprise remotely operated driving of the vehicle (13), and
- the shifted functions comprise manoeuvring (28) of the vehicle (13).

2. Method (10) according to Claim 1, comprising the following additional features:
- a connectivity (19) of the applications (15, 16, 17, 18) is established by way of communication units (23) on the part of the vehicle (13) and by way of backend connectors (24) on the part of the cloud (14), and
- the monitoring (11) relates to the communication units (23) and connectors (24).

3. Method (10) according to Claim 1 or 2, comprising the following additional features:
- the communication channels (21, 22) are used alternately and
- the control takes place by switching between the communication channels (21, 22) based on the operating parameters (25, 26, 27).

4. Method (10) according to Claim 1 or 2, comprising the following additional features:
- the communication channels (21, 22) are used simultaneously and
- the control takes place by allocating the applications (15, 16, 17, 18) to the communication channels (21, 22) based on requirements of the applications (15, 16, 17, 18) and the operating parameters (25, 26, 27).

5. Computer program configured to carry out the method (10) according to one Claims 1 to 4 when it is executed by a computer.

6. Machine-readable storage medium on which the computer program according to Claim 5 is stored.

7. Device (20) configured to carry out the method (10) according to one of Claims 1 to 4.

## Revendications

1. Procédé (10) permettant de commander des applications (15, 16, 17, 18) réparties entre un véhicule (13) et un nuage (14), comprenant les particularités suivantes :
- une surveillance (11) de canaux de communication (21, 22) entre le véhicule (13) et le nuage (14) est effectuée et porte sur l'un des paramètres de fonctionnement (25, 26, 27) suivants des canaux de communication (21, 22) :
• une latence (25),
• une fiabilité (26),
• une disponibilité (27), ou
• une capacité de transmission, et
- une commande et une adaptation (21) d'une partie (15, 17) des applications (15, 16, 17, 18) qui fonctionne dans le véhicule ou d'une partie (16, 18) des applications (15, 16, 17, 18) qui fonctionne dans le nuage (14) sont effectuées (12) à l'aide de la surveillance (11),
- des fonctions des applications (15, 16, 17, 18) sont sélectivement réalisées par la partie (15, 17) des applications (15, 16, 17, 18) qui fonctionne dans le véhicule (13) ou par la partie (16, 18) des applications (15, 16, 17, 18) qui fonctionne dans le nuage (14),
- la commande est effectuée en ce que les fonctions sont déplacées entre le véhicule (13) et le nuage (14) en fonction des paramètres de fonctionnement (25, 26, 27),
- les applications (15, 16, 17, 18) comprennent une conduite télécommandée du véhicule (13), et
- les fonctions déplacées comprennent le maniement (28) du véhicule (13).

2. Procédé (10) selon la revendication 1, comprenant les particularités supplémentaires suivantes :
- une connectivité (19) des applications (15, 16, 17, 18) est établie côté véhicule (13) au moyen d'unités de communication (23) et côté nuage (14) au moyen de connecteurs backend (24), et
- la surveillance (11) porte sur les unités de communication (23) et les connecteurs (24).

3. Procédé (10) selon la revendication 1 ou 2, comprenant les particularités supplémentaires suivantes :
- les canaux de communication (21, 22) sont utilisés en alternance, et
- la commande est effectuée en alternant entre les canaux de communication (21, 22) en fonction des paramètres de fonctionnement (25, 26, 27).

4. Procédé (10) selon la revendication 1 ou 2, comprenant les particularités supplémentaires suivantes :
- les canaux de communication (21, 22) sont utilisés en même temps, et
- la commande est effectuée en ce que les applications (15, 16, 17, 18) sont affectées aux canaux de communication (21, 22) en fonction des exigences des applications (15, 16, 17, 18) et des paramètres de fonctionnement (25, 26, 27).

5. Programme informatique qui, lorsqu'il est exécuté par un ordinateur, est conçu pour exécuter le procédé (10) selon l'une quelconque des revendications 1 à 4.

6. Support de stockage lisible par machine sur lequel est stocké le programme informatique selon la revendication 5.

7. Dispositif (20) qui est conçu pour exécuter le procédé (10) selon l'une quelconque des revendications 1 à 4.
